# EUROPEAN PATENT SPECIFICATION

(11) **EP 3 101 042 B1**
(45) Date of publication and mention of the grant of the patent: **03.07.2019**
(21) Application number: 15743412.7
(22) Date of filing: 15.01.2015
(51) Int. Cl.: C08F 222/10, C08F 2/44, C09K 5/14, C08F 287/00, C08F 290/06, C08F 299/02

(54) **THERMOSETTING RESIN COMPOSITION, CURED PRODUCT THEREOF, AND ELECTRIC/ELECTRONIC COMPONENT**
WÄRMEHÄRTENDE HARZZUSAMMENSETZUNG, GEHÄRTETES PRODUKT DARAUS UND ELEKTRISCHE/ELEKTRONISCHE KOMPONENTE
COMPOSITION DE RÉSINE THERMODURCISSABLE, SON PRODUIT DURCI ET COMPOSANT ÉLECTRIQUE/ÉLECTRONIQUE

(30) Priority: 29.01.2014 JP 2014014409
(43) Date of publication of application: 07.12.2016
(73) Proprietor: Showa Denko K.K., Tokyo 105-8518 (JP)
(72) Inventor: ISHIUCHI, Ryujin, Tokyo 105-8518 (JP); ITAMI, Shotaro, Tokyo 105-8518 (JP); FUJITA, Hidekazu, Tokyo 105-8518 (JP)
(74) Representative: Strehl Schübel-Hopf & Partner
(86) International application number: PCT/JP2015/050895
(87) International publication number: WO 2015/115186

(56) References cited:
- JP-A- S62 199 640
- JP-A- 2000 053 731
- JP-A- 2005 248 019
- JP-A- 2009 073 975
- JP-A- 2010 280 746
- JP-A- 2010 280 746

## Description

### TECHNICAL FIELD

The present invention relates to a thermosetting resin composition, a cured product thereof, and an electric/electronic component that uses the cured product. The invention relates particularly to a thermosetting resin composition used for sealing an electric/electronic component such as a motor or a coil, and an electric/electronic component such as a motor or a coil that has been sealed using the composition.

### BACKGROUND ART

Conventionally, electric/electronic components such as motors and coils are sealed using a resin composition for the purposes of enhancing the quietness through damping and simplifying the production process by using integral molding. Electric/electronic components sealed in this manner are widely used in a variety of applications, including electric vehicles, hybrid electric vehicles, OA equipment, air conditioners, and refrigerators and the number of potential applications continues to increase.

In recent years, various additional properties have been demanded of the resin compositions used for sealing these types of electric/electronic components. For example, as electric/electronic components have become smaller and thinner, the heating density of the electric/electronic components has increased. As a result, suppressing heat generation and enabling efficient transmission of any generated heat outside the component have become important issues. Accordingly, resin compositions that form cured products having high levels of thermal conductivity are now required. Further, cracking can sometimes occur due to shrinkage during curing of some resin compositions. As a result, minimizing shrinkage during curing is also necessary.

Accordingly, a number of resin compositions containing mainly an unsaturated polyester resin or a vinyl ester resin have been proposed as resin compositions that satisfy the above requirements (for example, see Patent Documents 1 and 2).

### PRIOR ART LITERATURE

### Patent Documents

Patent Document 1: Japanese Unexamined Patent Application, First Publication No. 2010-280746
Patent Document 2: Japanese Unexamined Patent Application, First Publication No. 2009-073975

### DISCLOSURE OF INVENTION

### Problems to be Solved by the Invention

Conventional resin compositions containing mainly an unsaturated polyester resin or a vinyl ester resin have thermal conductivity of less than 4 W/m·K. However, with recent trends towards smaller and higher output electric/electronic components, materials having higher thermal conductivity are now required.

The present invention has been developed in light of the above circumstances, and has an object of providing a thermosetting resin composition capable of producing a cured product that exhibits superior thermal conductivity and minimal mold shrinkage, a cured product of this composition, and an electric/electronic component that uses the cured product.

### Means for Solving the Problems

The inventors of the present invention undertook intensive research with the aim of achieving the above object.

As a result, they discovered that by using a polyfunctional (meth)acrylate and a copolymer having an acid group containing phosphoric acid as the main resin components, the copolymer becomes oriented on the surface of the filler particles, thereby inhibiting the close approach of particles of the high-thermal conductivity filler, and suppressing aggregation of particles of the filler. As a result, they found that the viscosity of the resin composition was reduced, enabling a higher fill ratio for the filler. Based on these findings, they discovered that by blending prescribed proportions of a polyfunctional (meth)acrylate with a prescribed filler, a curing agent and a copolymer having an acid group containing phosphoric acid, the object described above could be achieved, and they were thus able to complete the present invention described below.

[1] A thermosetting resin composition comprising a polyfunctional (meth)acrylate (a), a high-thermal conductivity filler (b) having a thermal conductivity of 20 to 250 W/m·K, a curing agent (c), and a copolymer (d) having an acid group containing phosphoric acid, wherein
   the polyfunctional (meth)acrylate (a) consists of a difunctional di(meth)acrylate represented by a formula (I) shown below:

   CH₂=CR₂COO-(R₁O)ₙ-COCR₂=CH₂ (I)

   (wherein n represents an integer of 1 or greater, R₁ represents an alkylene chain or polymethylene chain containing 1 to 14 carbon atoms, and R₂ represents a hydrogen atom or a methyl group) and an epoxy (meth)acrylate,
   an amount of the high-thermal conductivity filler (b) is from 1,700 to 2,000 parts by mass per 100 parts by mass of the polyfunctional (meth)acrylate (a), and
   an amount of the copolymer (d) having an acid group containing phosphoric acid is from 7.5 to 30 parts by mass per 100 parts by mass of the polyfunctional (meth)acrylate (a), and
   the high-thermal conductivity filler (b) includes aluminum oxide and magnesium oxide.
[2] The thermosetting resin composition according to [1], wherein a blend ratio between the difunctional di(meth)acrylate and the epoxy (meth)acrylate, reported as a mass ratio, is from 10:1 to 3:1.
[3] A thermosetting resin composition comprising a polyfunctional (meth)acrylate (a), a high-thermal conductivity filler (b) having a thermal conductivity of 20 to 250 W/m·K, a curing agent (c), and a copolymer (d) having an acid group containing phosphoric acid, wherein
   the polyfunctional (meth)acrylate (a) consists of a difunctional di(meth)acrylate represented by a formula (I) shown below:

   CH₂=CR₂COO-(R₁O)ₙ-COCR₂=CH₂ (I)

   (wherein n represents an integer of 1 or greater, R₁ represents an alkylene chain or polymethylene chain containing 1 to 14 carbon atoms, and R₂ represents a hydrogen atom or a methyl group),
   an amount of the high-thermal conductivity filler (b) is from 1,700 to 2,500 parts by mass per 100 parts by mass of the polyfunctional (meth)acrylate (a), and
   an amount of the copolymer (d) having an acid group containing phosphoric acid is from 10 to 35 parts by mass per 100 parts by mass of the polyfunctional (meth)acrylate (a), and
   the high-thermal conductivity filler (b) includes aluminum oxide and magnesium oxide.
[4] The thermosetting resin composition according to any one of [1] to [3], further comprising at least one component selected from the group consisting of thermoplastic resins (e), shrinkage reducing agents (f), and fiber materials (g).
[5] A cured product obtained by curing the thermosetting resin composition according to any one of [1] to [4].
[6] An electric/electronic component sealed with a cured product obtained by curing the thermosetting resin composition according to any one of [1] to [4].

### Effects of the Invention

The present invention is able to provide a thermosetting resin composition capable of producing a cured product that exhibits superior thermal conductivity and minimal mold shrinkage.

### BEST MODE FOR CARRYING OUT THE INVENTION

Embodiments of the present invention are described below in detail. However, the present invention is not limited solely to the following embodiments.

### [Thermosetting Resin Composition]

### (1) First Embodiment

A thermosetting resin composition of this embodiment contains a polyfunctional (meth)acrylate (a), a high-thermal conductivity filler (b) having a thermal conductivity of 20 to 250 W/m·K, a curing agent (c), and a copolymer (d) having an acid group containing phosphoric acid, wherein the amount of the high-thermal conductivity filler (b) is from 1,700 to 2,000 parts by mass per 100 parts by mass of the polyfunctional (meth)acrylate (a), and the amount of the copolymer (d) having an acid group containing phosphoric acid is from 7.5 to 30 parts by mass per 100 parts by mass of the polyfunctional (meth)acrylate (a).

In the present invention, the term "(meth)acrylate" means either acrylate or methacrylate.

The polyfunctional (meth)acrylate (a) consists of a difunctional di(meth)acrylate represented by a formula (I) shown below:

CH₂=CR₂COO-(R₁O)ₙ-COCR₂=CH₂ (I)

(wherein n represents an integer of 1 or greater, R₁ represents an alkylene chain or polymethylene chain containing 1 to 14 carbon atoms, and R₂ represents a hydrogen atom or a methyl group), and an epoxy (meth)acrylate.

There are no particular limitations on the difunctional di(meth)acrylate represented by the formula (I) shown above, and specific examples include ethylene glycol di(meth)acrylate, diethylene glycol di(meth)acrylate, 1,4-butanediol di(meth)acrylate, 1,6-hexanediol di(meth)acrylate, 1,9-nonanediol di(meth)acrylate, glycerol di(meth)acrylate, 2-hydroxy-3-acryloyloxypropyl (meth)acrylate, triethylene glycol di(meth)acrylate, polyethylene glycol di(meth)acrylate, neopentyl glycol di(meth)acrylate, 1,3-butanediol di(meth)acrylate, and 1,10-decanediol di(meth)acrylate. One of these compounds may be used alone, or a combination of two or more compounds may be used.

The epoxy (meth)acrylate used in the present embodiment has at least two (meth)acryloyl groups within each molecule, and is obtained by reacting an epoxy resin with (meth)acrylic acid.

Examples of the epoxy resin include ether-type bisphenol epoxy resins, novolac epoxy resins, polyphenol epoxy resins, aliphatic epoxy resins, ester-based aromatic epoxy resins, cycloaliphatic epoxy resins, ether-ester epoxy resins, glycidyl amine epoxy resins, as well as halogenated products and phenols of these resins, and resins produced by molecular chain extension using a dibasic acid. One of these resins may be used alone, or a combination of two or more resins may be used.

(Meth)acrylic acid is used in the preparation of the epoxy (meth)acrylate, but an unsaturated monobasic acid such as cinnamic acid, crotonic acid, monomethyl maleate, monopropyl maleate, mono(2-ethylhexyl) maleate or sorbic acid may also be used in combination with the (meth)acrylic acid.

The reaction between the epoxy resin and the (meth)acrylic acid is performed using an esterification catalyst, preferably at a temperature of 60 to 140°C, and more preferably a temperature of 80 to 120°C.

Conventional catalysts may be used as the esterification catalyst, including tertiary amines such as triethylamine, N,N-dimethylbenzylamine, N,N-dimethylaniline and diazabicyclooctane, triphenylphosphine and diethylamine hydrochloride.

A commercially available product may be used as the epoxy (meth)acrylate.

The blend ratio between the difunctional di(meth)acrylate and the epoxy (meth)acrylate, reported as a mass ratio, is preferably from 10:1 to 3:1, and more preferably from 7:1 to 4:1.

The reason that the blend ratio between the difunctional di(meth)acrylate and the epoxy (meth)acrylate preferably satisfies the above range is that if the proportion of the epoxy (meth)acrylate is too small, then it may sometimes be impossible to obtain the desired thermal conductivity for the cured product obtained by curing the thermosetting resin composition of the present embodiment. On the other hand, if the proportion of the epoxy (meth)acrylate is too large, then the cured product obtained by curing the thermosetting resin composition of the present embodiment may sometimes suffer from increased mold shrinkage and/or poor kneadability.

The high-thermal conductivity filler (b) has a thermal conductivity of 20 to 250 W/m·K. The high-thermal conductivity filler is preferably an inorganic filler having a thermal conductivity of 30 to 200 W/m·K.

The high-thermal conductivity filler (b), includes aluminum oxide and magnesium oxide used in combination.

From the viewpoint of the dispersibility of the filler in the thermosetting resin composition, the high-thermal conductivity filler (b) is preferably in particulate form.

When the high-thermal conductivity filler (b) exists in particulate form, the average particle size is preferably from 0.5 µm to 50 µm, and more preferably from 1 µm to 30 µm.

The average particle size refers to the "arithmetic mean particle diameter" defined in JIS Z8901-2006 "Test Powders and Test Particles".

The amount of the high-thermal conductivity filler (b) is typically from 1,700 to 2,000 parts by mass per 100 parts by mass of the polyfunctional (meth)acrylate (a).

In the first embodiment, the expression "100 parts by mass of the polyfunctional (meth)acrylate (a)" means a total of 100 parts by mass of the combined resin component containing the difunctional di(meth)acrylate and the epoxy (meth)acrylate.

There are no particular limitations on the curing agent (c), and known curing agents may be selected as appropriate. Specific examples of the curing agent (c) include peroxides such as t-butyl peroxyoctoate, benzoyl peroxide, 1,1-di-t-butylperoxy-3,3,5-trimethylcyclohexane, t-butylperoxy isopropyl carbonate, t-butyl peroxybenzoate, dicumyl peroxide and di-t-butyl peroxide. One of these curing agents may be used alone, or a combination of two or more curing agents may be used.

The amount of the curing agent (c) is preferably from 0.5 to 10 parts by mass, and more preferably from 1 to 6 parts by mass, per 100 parts by mass of the polyfunctional (meth)acrylate (a).

By ensuring that the amount of the curing agent (c) is at least 0.5 parts by mass, the thermosetting resin composition of the first embodiment can be cured satisfactorily. On the other hand, by ensuring that the amount of the curing agent (c) is not more than 10 parts by mass, waste caused by saturation of the curing agent (c) can be avoided, enabling a reduction in costs.

The copolymer (d) having an acid group containing phosphoric acid is used for enhancing the fill characteristics of the high-thermal conductivity filler (b). There are no particular limitations on the copolymer (d) having an acid group containing phosphoric acid, and examples include copolymers of saturated polyesters having phosphate ester linkages. Commercially available products marketed under the product names BYK-W985, W995, W996 and W9010 (manufactured by BYK-Chemie GmbH) may also be used as the copolymer (d) having an acid group containing phosphoric acid.

The amount of the copolymer (d) having an acid group containing phosphoric acid is typically from 7.5 to 30 parts by mass, and preferably from 13 to 25 parts by mass, per 100 parts by mass of the polyfunctional (meth)acrylate (a).

If the amount of the copolymer (d) having an acid group containing phosphoric acid is less than 7.5 parts by mass, then the effect of the copolymer in enhancing the fill characteristics of the high-thermal conductivity filler (b) (enabling an increase in the amount of the high-thermal conductivity filler (b) in the thermosetting resin composition) cannot be obtained. On the other hand, if the amount of the copolymer (d) having an acid group containing phosphoric acid exceeds 30 parts by mass, then not only does the effect of the copolymer in enhancing the fill characteristics of the high-thermal conductivity filler (b) become saturated, but the thermal conductivity of the cured product obtained by curing the thermosetting resin composition of the present embodiment tends to deteriorate.

The thermosetting resin composition of the first embodiment contains the above components (a) to (d) as essential components, but may also contain other components in order to enhance specific physical properties.

There are no particular limitations on these other components, and the types of components typically used in thermosetting resin compositions may be added. Examples of these other components include thermoplastic resins (e), shrinkage reducing agents (f), and fiber materials (g). Any one of these components may be used alone, or a combination of two or more components may be used.

A thermoplastic resin (e) may be added to the thermosetting resin composition of the first embodiment for the purpose of enhancing the kneadability.

There are no particular limitations on the thermoplastic resin (e), and specific examples include polystyrene, polymethyl methacrylate, polyvinyl acetate, styrene-vinyl acetate block copolymers, saturated polyesters, styrene-diene block copolymers, cellulose acetate butyrate, cellulose acetate propionate, liquid rubbers and synthetic rubbers. One of these resins may be used alone, or a combination of two or more resins may be used.

The amount of the thermoplastic resin (e) is preferably from 5 to 40 parts by mass, and more preferably from 10 to 20 parts by mass, per 100 parts by mass of the polyfunctional (meth)acrylate (a).

By ensuring that the amount of the thermoplastic resin (e) is at least 5 parts by mass, the kneadability can be enhanced. On the other hand, by ensuring that the amount of the thermoplastic resin (e) is not more than 40 parts by mass, the thermal conductivity of the thermosetting resin composition of the first embodiment improves, and the fill characteristics also improve.

A shrinkage reducing agent (f) may be added to the thermosetting resin composition of the first embodiment for the purpose of reducing the shrinkage during curing.

The shrinkage reducing agent (f) in the present invention is a low-molecular weight compound (having a number-average molecular weight of not more than 4,000, and preferably 1,000 or less). Examples of the shrinkage reducing agent (f) include process oils, paste-like oils, paraffin wax, microcrystalline wax, liquid paraffin, higher alcohols, fatty oils and chlorinated paraffin. One of these compounds may be used alone, or a combination of two or more compounds may be used.

The amount of the shrinkage reducing agent (f) is preferably from 3 to 20 parts by mass, and more preferably from 5 to 15 parts by mass, per 100 parts by mass of the polyfunctional (meth)acrylate (a).

By ensuring that the amount of the shrinkage reducing agent (f) is at least 3 parts by mass, the amount of shrinkage during curing can be reduced. On the other hand, by ensuring that the amount of the shrinkage reducing agent (f) is not more than 20 parts by mass, the thermal conductivity of the thermosetting resin composition of the first embodiment can be improved.

A fiber material (g) may be added to the thermosetting resin composition of the first embodiment for the purposes of enhancing the strength of the cured product (molded item) obtained by curing the thermosetting resin composition of the first embodiment, and reducing the mold shrinkage of the cured product.

There are no particular limitations on the fiber material (g), and examples include glass fiber, vinylon fiber, polyester fiber, phenol fiber and carbon fiber. Among these, in terms of ease of availability, glass fiber is preferred. Specific examples of the glass fiber include glass chopped fiber, milled glass and roving glass.

The fiber length of the fiber material (g) is preferably not more than 10 mm, and more preferably from 0.05 mm to 3 mm. In particular, by using a fiber material (g) having a fiber length of 1.5 mm or less, any deterioration in the kneadability upon kneading during preparation of the thermosetting resin composition of the first embodiment can be prevented.

The amount of the fiber material (g) is preferably from 50 to 300 parts by mass, and more preferably from 100 to 150 parts by mass, per 100 parts by mass of the polyfunctional (meth)acrylate (a).

By ensuring that the amount of the fiber material (g) is at least 50 parts by mass, the strength of the cured product (molded item) obtained by curing the thermosetting resin composition of the first embodiment can be enhanced, and the mold shrinkage of the cured product can be reduced. On the other hand, by ensuring that the amount of the fiber material (g) is not more than 300 parts by mass, any deterioration in the kneadability upon kneading during preparation of the thermosetting resin composition of the first embodiment can be prevented.

Any of various other additives besides the components (e) to (g) described above may also be added to the thermosetting resin composition of the first embodiment, provided the effects of the first embodiment are not impaired.

Examples of these additives include fillers other than the high-thermal conductivity filler (b), mold release agents, thickeners and pigments.

The thermosetting resin composition of the present embodiment can be prepared in accordance with typical production methods using the components described above.

For example, the composition may be prepared by kneading the essential components (a) to (d) and the optional components (e) and (f) using a double arm kneader, and then adding and kneading the optional component (g). In particular, because the viscosity of the thermosetting resin composition of the present embodiment is reduced by using the polyfunctional (meth)acrylate (a), kneading can still be performed satisfactorily even if the high-thermal conductivity filler (b) is added in a large amount.

The thermosetting resin composition of the first embodiment prepared in this manner can produce a cured product having a thermal conductivity of at least 4.0 W/m·K and mold shrinkage rate of 0.15% or less. As a result, the thermosetting resin composition of the first embodiment is ideal for use as a sealing material for sealing an electric/electronic component wherein both superior thermal conductivity of a cured product and low shrinkage are required. There are no particular limitations on the types of electric/electronic components that can be sealed using the thermosetting resin composition of the first embodiment, and examples include motors and coils.

### (2) Second Embodiment

A thermosetting resin composition of the second embodiment contains a polyfunctional (meth)acrylate (a), a high-thermal conductivity filler (b), a curing agent (c), and a copolymer (d) having an acid group containing phosphoric acid, wherein the amount of the high-thermal conductivity filler (b) is from 1,700 to 2,500 parts by mass per 100 parts by mass of the polyfunctional (meth)acrylate (a), and the amount of the copolymer (d) having an acid group containing phosphoric acid is from 10 to 35 parts by mass per 100 parts by mass of the polyfunctional (meth)acrylate (a).

The polyfunctional (meth)acrylate (a) is a difunctional di(meth)acrylate represented by a formula (I) shown below:

CH₂=CR₂COO-(R₁O)ₙ-COCR₂=CH₂ (I)

(wherein n represents an integer of 1 or greater, R₁ represents an alkylene chain or polymethylene chain containing 1 to 14 carbon atoms, and R₂ represents a hydrogen atom or a methyl group).

The difunctional di(meth)acrylate represented by the formula (I) shown above may employ the same compounds as those described above for the first embodiment.

Similarly, the high-thermal conductivity filler (b) uses the same fillers as those described above for the first embodiment.

The amount of the high-thermal conductivity filler (b) is from 1,700 to 2,500 parts by mass, and preferably from 1,900 to 2,300 parts by mass, per 100 parts by mass of the polyfunctional (meth)acrylate (a).

If the amount of the high-thermal conductivity filler (b) is less than 1,700 parts by mass, then it may become impossible to obtain the desired thermal conductivity for the cured product obtained by curing the thermosetting resin composition of the second embodiment. On the other hand, if the amount of the high-thermal conductivity filler (b) exceeds 2,500 parts by mass, then the fill characteristics of the high-thermal conductivity filler tend to deteriorate, and it becomes impossible to obtain a thermosetting resin composition in which the high-thermal conductivity filler (b) is dispersed uniformly.

In the second embodiment, the expression "100 parts by mass of the polyfunctional (meth)acrylate (a)" means 100 parts by mass of the difunctional di(meth)acrylate.

The curing agent (c) may use the same curing agents as those described above for the first embodiment.

The copolymer (d) having an acid group containing phosphoric acid may use the same copolymers as those described above for the first embodiment.

The amount of the copolymer (d) having an acid group containing phosphoric acid is typically from 10 to 35 parts by mass, and preferably from 15 to 30 parts by mass, per 100 parts by mass of the polyfunctional (meth)acrylate (a).

If the amount of the copolymer (d) having an acid group containing phosphoric acid is less than 10 parts by mass, then the effect of the copolymer in enhancing the fill characteristics of the high-thermal conductivity filler (b) (enabling an increase in the amount of the high-thermal conductivity filler (b) in the thermosetting resin composition) cannot be obtained. On the other hand, if the amount of the copolymer (d) having an acid group containing phosphoric acid exceeds 35 parts by mass, then not only does the effect of the copolymer in enhancing the fill characteristics of the high-thermal conductivity filler (b) become saturated, but the thermal conductivity of the cured product obtained by curing the thermosetting resin composition of the second embodiment tends to deteriorate.

The thermosetting resin composition of the second embodiment contains the above components (a) to (d) as essential components, but in a similar manner to the first embodiment described above, may also contain other components (the components (e) to (g) described above, and various other additives) in order to enhance specific physical properties.

The thermosetting resin composition of the second embodiment can be prepared in a similar manner to the composition of the aforementioned first embodiment.

The thermosetting resin composition of the second embodiment prepared in this manner can produce a cured product having a thermal conductivity of at least 4.0 W/m·K and mold shrinkage rate of 0.10% or less. As a result, the thermosetting resin composition of the second embodiment is ideal for use as a sealing material for sealing an electric/electronic component wherein both superior thermal conductivity of a cured product and low shrinkage are required. There are no particular limitations on the types of electric/electronic components that can be sealed using the thermosetting resin composition of the second embodiment, and examples include motors and coils.

### [Cured Product]

Cured products of the first and second embodiments are obtained by curing the thermosetting resin compositions of the respective embodiments described above.

There are no particular limitations on the method used for producing the cured products of the first and second embodiments, and for example, production can be performed by compression molding, transfer molding, or injection molding or the like using the thermosetting resin compositions of the respective embodiments described above.

The cured products of the first and second embodiments are obtained by curing the thermosetting resin compositions of the respective embodiments described above, and therefore have a thermal conductivity of at least 4.0 W/m·K and a mold shrinkage rate of 0.15% or less. Accordingly, the cured products of the first and second embodiments are ideal for use as sealing materials for sealing electric/electronic components wherein a combination of superior thermal conductivity and low shrinkage is required.

### [Electric/Electronic Component]

An electric/electronic component of the present embodiment is a component that has been sealed using a cured product obtained by curing the thermosetting resin composition of the first or second embodiment described above.

Examples of the electric/electronic component of the present embodiment include motors, coils, and semiconductors and the like.

There are no particular limitations on the method used for sealing the electric/electronic component of the present embodiment, and in one example, the thermosetting resin composition of the first or second embodiment described above is molded by compression molding, transfer molding, or injection molding or the like, and the molded composition is then cured to seal the electric/electronic component. More specifically, the thermosetting resin composition of the first or second embodiment described above is molded by any of various molding techniques inside a case housing the electric/electronic component, and the thermosetting resin composition is then cured by heating at a prescribed temperature.

The curing conditions for the thermosetting resin composition of each embodiment may be set appropriately in accordance with the raw materials used in preparing the thermosetting resin composition of that embodiment, but the curing temperature is generally from 120 to 160°C, and the curing time is generally from 1 to 30 minutes.

The electric/electronic component of the present embodiment obtained in this manner is sealed with a sealing material that exhibits excellent thermal conductivity and is resistant to cracking, and therefore the operation of the component can be stabilized and the reliability can be improved.

### EXAMPLES

The present invention is described below in further detail using a series of examples and comparative examples.

### <Examples 1 to 4 and 6 to 12>

Using a double arm kneader, the components shown in Table 1 (excluding the glass fiber) were kneaded in the blend proportions shown, and the glass fiber was then added in the prescribed proportion and kneaded to complete preparation of a thermosetting resin composition. The units for the blend amounts shown in Table 1 are parts by mass. The labels (a) to (g) in Table 1 correspond with (a) to (g) in the above description.

### <Comparative Examples 1 to 8>

In each of Comparative Examples 1 to 8, a double arm kneader was used to knead the components shown in Table 2 (excluding the glass fiber) in the blend proportions shown, and the glass fiber was then added in the prescribed proportion and kneaded to complete preparation of a thermosetting resin composition. In Comparative Examples 1, 2, 4 to 6, and 8, thermosetting resin compositions were prepared in which the amount of the high-thermal conductivity filler (b) was outside the prescribed range. The units for the blend amounts shown in Table 2 are parts by mass. Further, the labels (a) to (g) in Table 2 correspond with (a) to (g) in the above description.

The materials labeled 1) to 6) in Table 1 and Table 2 are the materials shown below.
1) Ethylene glycol dimethacrylate
2) Polyethylene glycol dimethacrylate (polyethylene molecular weight: 200)
3) Bisphenol A epoxy acrylate (product name: Ripoxy VR-90 (manufactured by Showa Denko K.K.))
4) BYK W995 (manufactured by BYK-Chemie GmbH)
5) Styrene-modified vinyl acetate block copolymer
6) Ethylene-α-olefin copolymer

The kneadability of the thermosetting resin compositions obtained in Examples 1 to 4 and 6 to 12 and Comparative Examples 1 to 8 was evaluated, and the cured product of each composition was also evaluated for mold shrinkage rate and thermal conductivity. The evaluation methods used are described below.

### (1) Mold shrinkage rate

Using each of the thermosetting resin compositions obtained in Examples 1 to 4 and 6 to 12 and Comparative Examples 1 to 8, a shrinkage disc prescribed in JIS K6911 (1995) "General Testing Methods for Thermosetting Plastics" was compression molded under conditions including a molding temperature of 150°C, a molding pressure of 10 MPa and a molding time of 3 minutes, and the mold shrinkage rate was then caclulated in accordance with JIS K6911 (1995).

### (2) Thermal Conductivity

Using each of the thermosetting resin compositions obtained in Examples 1 to 4 and 6 to 12 and Comparative Examples 1 to 8, a flate plate of dimensions length 150 mm × width 150 mm × thickness 20 mm was molded by compression molding under conditions including a molding temperature of 150°C, a molding pressure of 10 MPa and a molding time of 15 minutes. The thermal conductivity of the molded flat plate was measured by the QTM method (measurement device: QTM-500 manufactured by Kyoto Electronics Manufacturing Co., Ltd.) under the following measurement conditions. Sensor probe: PD-11, heater current: AUTO, current value: 2.000 A², measurement temperature: 25°C, measurement time: 30 seconds.

### (3) Kneadability

The various components were kneaded using a double arm kneader, and the kneadability was evaluated as follows.
⊚: the materials were joined and formed a bulk within 30 minutes of starting kneading.
○: the materials were joined and formed a bulk after a time exceeding 30 minutes but within 60 minutes of starting kneading.
×: the materials did not form a bulk even after a time exceeding 60 minutes from the start of kneading.

The results of the above evaluations are shown in Table 1 and Table 2.

**[Table 1]**

| Component | | Example 1 | Example 2* | Example 3* | Example 4 | Example 6 | Example 7 | Example 8 | Example 9 | Example 10 | Example 11 | Example 12 |
|---|---|---|---|---|---|---|---|---|---|---|---|---|
| (a) | EGDMA ¹⁾ | 100 | 100 | 100 | - | 100 | 100 | 100 | 100 | 100 | 100 | 100 |
| | 4EGDMA ²⁾ | - | - | - | 100 | - | - | - | - | - | - | - |
| | Epoxy acrylate ³⁾ | 20 | 20 | 20 | 20 | - | - | 20 | 20 | 20 | 20 | - |
| (b) | Aluminum oxide | 1250 | 1150 | 1470 | 1250 | 1080 | 1500 | 1250 | 1250 | 1250 | 1250 | 1250 |
| | Magnesium oxide | 870 | 770 | 1030 | 870 | 720 | 1000 | 870 | 870 | 870 | 870 | 870 |
| | Parts by mass of (b) per 100 parts by mass of (a) | 1767 | 1600 | 2083 | 1767 | 1800 | 2500 | 1767 | 1767 | 1767 | 1767 | 2120 |
| (c) | t-butyl peroxybenzoate | 1.5 | 1.5 | 1.5 | 1.5 | 1.5 | 1.5 | 1.5 | 1.5 | 1.5 | 1.5 | 1.5 |
| (d) | Copolymer having acid group containing phosphoric acid ⁴⁾ | 20 | 9 | 30 | 20 | 10 | 30 | 20 | 20 | 20 | 20 | 20 |
| | Parts by mass of (d) per 100 parts by mass of (a) | 16.7 | 7.5 | 25 | 16.7 | 10 | 30 | 16.7 | 16.7 | 16.7 | 16.7 | 20 |
| (e) | Thermoplastic resin ⁵⁾ | 15 | 15 | 15 | 15 | 15 | 15 | 0 | 15 | 15 | 0 | 0 |
| (f) | Shrinkage reducing agent ⁶⁾ | 10 | 10 | 10 | 10 | 10 | 10 | 10 | 0 | 10 | 0 | 0 |
| (g) | Glass fiber | 110 | 110 | 110 | 110 | 110 | 110 | 110 | 110 | 0 | 0 | 0 |
| Thermal conductivity (W/m·K) | | 5.0 | 4.2 | 5.7 | 4.6 | 4.1 | 5.4 | 5.4 | 5.1 | 5.5 | 6.0 | 5.6 |
| Mold shrinkage rate (%) | | 0.00 | 0.02 | -0.01 | 0.02 | 0.00 | -0.04 | 0.04 | 0.02 | 0.08 | 0.12 | 0.10 |
| Kneadability | | ⊚ | ⊚ | ⊚ | ⊚ | ⊚ | ⊚ | ○ | ⊚ | ⊚ | ○ | ○ |

| | | | | | | | | | | | | |
|---|---|---|---|---|---|---|---|---|---|---|---|---|
| * Reference only | | | | | | | | | | | | |

**[Table 2]**

| Component | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| | EGDMA ¹⁾ | 100 | 100 | 100 | 100 | 100 | 100 | 100 | 100 |
| (a) | 4EGDMA ²⁾ | - | - | - | - | - | - | - | - |
| | Epoxy acrylate ³⁾ | 20 | 20 | 20 | 20 | - | - | - | - |
| | Aluminum oxide | 940 | 1600 | 1150 | 1600 | 940 | 1600 | 1150 | 1600 |
| | Magnesium oxide | 660 | 1110 | 770 | 1110 | 660 | 1110 | 770 | 1110 |
| (b) | Parts by mass of (b) per 100 parts by mass of (a) | 1333 | 2258 | 1600 | 2258 | 1600 | 2710 | 1920 | 2710 |
| (c) | t-butyl peroxybenzoate | 1.5 | 1.5 | 1.5 | 1.5 | 1.5 | 1.5 | 1.5 | 1.5 |
| | Copolymer having acid group containing phosphoric acid ⁴⁾ | 9 | 30 | 7.5 | 40 | 10 | 35 | 9 | 37 |
| (d) | Parts by mass of (d) per 100 parts by mass of (a) | 7.5 | 25 | 6.25 | 33.3 | 10 | 35 | 9 | 37 |
| (e) | Thermoplastic resin ⁵⁾ | 15 | 15 | 15 | 15 | 15 | 15 | 15 | 15 |
| (f) | Shrinkage reducing agent ⁶⁾ | 10 | 10 | 10 | 10 | 10 | 10 | 10 | 10 |
| (g) | Glass fiber | 110 | 110 | 110 | 110 | 110 | 110 | 110 | 110 |
| Thermal conductivity (W/m·K) | | 3.6 | - | - | - | 3.5 | - | - | - |
| Mold shrinkage rate (%) | | 0.04 | - | - | - | 0.03 | - | - | - |
| Kneadability | | ⊚ | × | × | × | ⊚ | × | × | × |

Based on the results in Table 1 and Table 2, it was evident that for the thermosetting resin compositions of Examples 1 to 4 and 6 to 12, each of which used the polyfunctional (meth)acrylate (a), and contained an amount of the high-thermal conductivity filler (b) of either 1,700 to 2,000 parts by mass (in Examples 1 and 4 and Examples 8 to 11 where the polyfunctional (meth)acrylate (a) was composed of EGDMA and the epoxy acrylate) or 1,700 to 2,500 parts by mass (in Examples 6 and 7 and Example 12 where the polyfunctional (meth)acrylate (a) was EGDMA) per 100 parts by mass of the polyfunctional (meth)acrylate (a), the kneadability was favorable, and a cured product was obtained which had superior thermal conductivity (at least 4 W/m·K) and minimal mold shrinkage.

Further, it was also evident that in Examples 11 and 12, even though the composition did not contain the thermoplastic resin (e), the shrinkage reducing agent (f) and the glass fiber (g), the kneadability was still favorable, and a cured product was obtained which had superior thermal conductivity (at least 4 W/m·K) and minimal mold shrinkage.

In contrast, in the thermosetting resin composition of Comparative Example 1, in which the polyfunctional (meth)acrylate (a) was composed of EGDMA and the epoxy acrylate, because the amount of the high-thermal conductivity filler (b) was 1,333 parts by mass per 100 parts by mass of the polyfunctional (meth)acrylate (a), although the kneadability was favorable, the thermal conductivity was low.

Further, in the thermosetting resin composition of Comparative Example 2, in which the polyfunctional (meth)acrylate (a) was composed of EGDMA and the epoxy acrylate, because the amount of the high-thermal conductivity filler (b) was 2,258 parts by mass per 100 parts by mass of the polyfunctional (meth)acrylate (a), satisfactory kneadability could not be obtained.

Further, in the thermosetting resin composition of Comparative Example 3, in which the polyfunctional (meth)acrylate (a) was composed of EGDMA and the epoxy acrylate, because the amount of the copolymer (d) having an acid group containing phosphoric acid was 6.25 parts by mass per 100 parts by mass of the polyfunctional (meth)acrylate (a), satisfactory kneadability could not be obtained.

Further, in the thermosetting resin composition of Comparative Example 4, in which the polyfunctional (meth)acrylate (a) was composed of EGDMA and the epoxy acrylate, because the amount of the copolymer (d) having an acid group containing phosphoric acid was 33.3 parts by mass per 100 parts by mass of the polyfunctional (meth)acrylate (a), satisfactory kneadability could not be obtained.

Furthermore, in the thermosetting resin composition of Comparative Example 5, in which the polyfunctional (meth)acrylate (a) was EGDMA, because the amount of the high-thermal conductivity filler (b) was 1,600 parts by mass per 100 parts by mass of the polyfunctional (meth)acrylate (a), although the kneadability was favorable, the thermal conductivity was low.

Further, in the thermosetting resin composition of Comparative Example 6, in which the polyfunctional (meth)acrylate (a) was EGDMA, because the amount of the high-thermal conductivity filler (b) was 2,710 parts by mass per 100 parts by mass of the polyfunctional (meth)acrylate (a), satisfactory kneadability could not be obtained.

Further, in the thermosetting resin composition of Comparative Example 7, in which the polyfunctional (meth)acrylate (a) was EGDMA, because the amount of the copolymer (d) having an acid group containing phosphoric acid was 9 parts by mass per 100 parts by mass of the polyfunctional (meth)acrylate (a), satisfactory kneadability could not be obtained.

Furthermore, in the thermosetting resin composition of Comparative Example 8, in which the polyfunctional (meth)acrylate (a) was EGDMA, because the amount of the copolymer (d) having an acid group containing phosphoric acid was 37 parts by mass per 100 parts by mass of the polyfunctional (meth)acrylate (a), satisfactory kneadability could not be obtained.

### INDUSTRIAL APPLICABILITY

By using the present invention, a thermosetting resin composition can be provided which yields a cured product having high thermal conductivity and minimal mold shrinkage.

## Claims

1. A thermosetting resin composition comprising a polyfunctional (meth)acrylate (a), a high-thermal conductivity filler (b) having a thermal conductivity of 20 to 250 W/m·K, a curing agent (c), and a copolymer (d) having an acid group containing phosphoric acid, wherein
the polyfunctional (meth)acrylate (a) consists of a difunctional di(meth)acrylate represented by a formula (I) shown below:
CH₂=CR₂COO-(R₁O)ₙ-COCR₂=CH₂ (I)
(wherein n represents an integer of 1 or greater, R₁ represents an alkylene chain or polymethylene chain containing 1 to 14 carbon atoms, and R₂ represents a hydrogen atom or a methyl group) and an epoxy (meth)acrylate,
an amount of the high-thermal conductivity filler (b) is from 1,700 to 2,000 parts by mass per 100 parts by mass of the polyfunctional (meth)acrylate (a), and
an amount of the copolymer (d) having an acid group containing phosphoric acid is from 7.5 to 30 parts by mass per 100 parts by mass of the polyfunctional (meth)acrylate (a), and
the high-thermal conductivity filler (b) includes aluminum oxide and magnesium oxide.

2. The thermosetting resin composition according to Claim 1, wherein a blend ratio between the difunctional di(meth)acrylate and the epoxy (meth)acrylate, reported as a mass ratio, is from 10:1 to 3:1.

3. A thermosetting resin composition comprising a polyfunctional (meth)acrylate (a), a high-thermal conductivity filler (b) having a thermal conductivity of 20 to 250 W/m·K, a curing agent (c), and a copolymer (d) having an acid group containing phosphoric acid, wherein
the polyfunctional (meth)acrylate (a) consists of a difunctional di(meth)acrylate represented by a formula (I) shown below:
CH₂=CR₂COO-(R₁O)ₙ-COCR₂=CH₂ (I)
(wherein n represents an integer of 1 or greater, R₁ represents an alkylene chain or polymethylene chain containing 1 to 14 carbon atoms, and R₂ represents a hydrogen atom or a methyl group),
an amount of the high-thermal conductivity filler (b) is from 1,700 to 2,500 parts by mass per 100 parts by mass of the polyfunctional (meth)acrylate (a), and
an amount of the copolymer (d) having an acid group containing phosphoric acid is from 10 to 35 parts by mass per 100 parts by mass of the polyfunctional (meth)acrylate (a), and
the high-thermal conductivity filler (b) includes aluminum oxide and magnesium oxide.

4. The thermosetting resin composition according to any one of Claims 1 to 3, further comprising at least one component selected from the group consisting of thermoplastic resins (e), shrinkage reducing agents (f), and fiber materials (g).

5. A cured product obtained by curing the thermosetting resin composition according to any one of Claims 1 to 4.

6. An electric/electronic component sealed with a cured product obtained by curing the thermosetting resin composition according to any one of Claims 1 to 4.

## Patentansprüche

1. Wärmehärtbare Harzzusammensetzung, umfassend ein polyfunktionelles (Meth)acrylat (a), einen hochwärmeleitfähigen Füllstoff (b) mit einer Wärmeleitfähigkeit von 20 bis 250 W/m·K, ein Härtungsmittel (c) und ein Copolymer (d) mit einer phosphorsäurehaltigen Säuregruppe, worin
das polyfunktionelle (Meth)acrylat (a) aus einem difunktionellen Di(meth)acrylat der untenstehenden Formel (I)
CH₂=CR₂COO-(R₁O)ₙ-COCR₂=CH₂ (I)
(worin n eine ganze Zahl von 1 oder mehr darstellt, R₁ eine Alkylenkette oder Polymethylenkette mit 1 bis 14 Kohlenstoffatomen darstellt und R₂ ein Wasserstoffatom oder eine Methylgruppe darstellt) und einem Epoxy(meth)acrylat besteht,
eine Menge des hochwärmeleitfähigen Füllstoffs (b) von 1.700 bis 2.000 Masseteilen pro 100 Masseteile des polyfunktionellen (Meth)acrylats (a) beträgt, und
eine Menge des Copolymers (d) mit einer phosphorsäurehaltigen Säuregruppe von 7,5 bis 30 Massenteilen pro 100 Massenteile des polyfunktionellen (Meth)acrylats (a) beträgt, und
der hochwärmeleitfähige Füllstoff (b) Aluminiumoxid und Magnesiumoxid enthält.

2. Wärmehärtende Harzzusammensetzung nach Anspruch 1, worin ein als Massenverhältnis angegebene Mischungsverhältnis zwischen dem difunktionellen Di(meth)acrylat und dem Epoxy(meth)acrylat 10:1 bis 3:1 beträgt.

3. Wärmehärtbare Harzzusammensetzung, umfassend ein polyfunktionelles (Meth)acrylat (a), einen hochwärmeleitfähigen Füllstoff (b) mit einer Wärmeleitfähigkeit von 20 bis 250 W/m·K, ein Härtungsmittel (c) und ein Copolymer (d) mit einer phosphorsäurehaltigen Säuregruppe, worin
das polyfunktionelle (Meth)acrylat (a) aus einem difunktionellen Di(meth)acrylat der untenstehenden Formel (I) besteht:
CH₂=CR₂COO-(R₁O)ₙ-COCR₂=CH₂ (I)
(worin n eine ganze Zahl von 1 oder mehr darstellt, R₁ eine Alkylenkette oder Polymethylenkette mit 1 bis 14 Kohlenstoffatomen darstellt und R₂ ein Wasserstoffatom oder eine Methylgruppe darstellt),
eine Menge des hochwärmeleitfähigen Füllstoffs (b) von 1.700 bis 2.500 Masseteilen pro 100 Masseteile des polyfunktionellen (Meth)acrylats (a) beträgt, und
eine Menge des Copolymers (d) mit einer phosphorsäurehaltigen Säuregruppe von 10 bis 35 Massenteilen pro 100 Massenteile des polyfunktionellen (Meth)acrylats (a) beträgt, und
der hochwärmeleitfähige Füllstoff (b) Aluminiumoxid und Magnesiumoxid enthält.

4. Wärmehärtbare Harzzusammensetzung nach einem der Ansprüche 1 bis 3, ferner umfassend mindestens eine Komponente, die aus der aus thermoplastischen Harzen (e), Schwindungsreduktionsmitteln (f) und Fasermaterialien (g) bestehenden Gruppe ausgewählt ist.

5. Gehärtetes Produkt, erhalten durch Härten der wärmehärtbaren Harzzusammensetzung nach einem der Ansprüche 1 bis 4.

6. Elektrische/elektronische Komponente, die mit einem gehärteten Produkt versiegelt ist, das durch Härten der wärmehärtbaren Harzzusammensetzung nach einem der Ansprüche 1 bis 4 erhalten wird.

## Revendications

1. Composition de résine thermodurcissable comprenant (a) un (méth)acrylate polyfonctionnel, (b) une charge à haute conductivité thermique présentant une conductivité thermique comprise entre 20 W/m·K et 250 W/m·K, (c) un agent de durcissement, et (d) un copolymère présentant un groupe acide contenant de l'acide phosphorique, dans laquelle
le (méth)acrylate polyfonctionnel (a) est composé d'un di(méth)acrylate difonctionnel représenté par une formule (I) indiquée ci-dessous:
CH₂=CR₂COO-(R₁O)ₙ-COCR₂=CH₂ (I)
(dans laquelle n représente un entier de 1 ou plus, R₁ représente une chaîne alkylène ou une chaîne polyméthylène contenant de 1 à 14 atomes de carbone, et R₂ représente un atome d'hydrogène ou un groupe méthyle) et un (méth)acrylate d'époxy,
une quantité de la charge à haute conductivité thermique (b) est comprise entre 1700 et 2000 parties en masse par 100 parties en masse du (méth)acrylate polyfonctionnel (a), et
une quantité du copolymère (d) présentant un groupe acide contenant de l'acide phosphorique est comprise entre 7,5 et 30 parties en masse par 100 parties en masse du (méth)acrylate polyfonctionnel (a), et
la charge à haute conductivité thermique (b) comprend de l'oxyde d'aluminium et de l'oxyde de magnésium.

2. Composition de résine thermodurcissable selon la revendication 1, dans laquelle un rapport de mélange entre le di(méth)acrylate difonctionnel et le (méth)acrylate d'époxy, rapporté en rapport de masse, est compris entre 10:1 et 3:1.

3. Composition de résine thermodurcissable comprenant un (méth)acrylate polyfonctionnel (a), une charge à haute conductivité thermique (b) présentant une conductivité thermique comprise entre 20 W/m·K et 250 W/m·K, un agent de durcissement (c), et un copolymère (d) présentant un groupe acide contenant de l'acide phosphorique, dans laquelle
le (méth)acrylate polyfonctionnel (a) est un di(méth)acrylate difonctionnel représenté par une formule (I) indiquée ci-dessous:
CH₂=CR₂COO-(R₁O)ₙ-COCR₂=CH₂ (I)
(dans laquelle n représente un entier de 1 ou plus, R₁ représente une chaîne alkylène ou une chaîne polyméthylène contenant de 1 à 14 atomes de carbone, et R₂ représente un atome d'hydrogène ou un groupe méthyle),
une quantité de la charge à haute conductivité thermique (b) est comprise entre 1700 et 2500 parties en masse par 100 parties en masse du (méth)acrylate polyfonctionnel (a), et
une quantité du copolymère (d) présentant un groupe acide contenant de l'acide phosphorique est comprise entre 10 et 35 parties en masse par 100 parties en masse du (méth)acrylate polyfonctionnel (a), et
la charge à haute conductivité thermique (b) comprend de l'oxyde d'aluminium et de l'oxyde de magnésium.

4. Composition de résine thermodurcissable selon l'une quelconque des revendications 1 à 3, comprenant en outre au moins un composant sélectionné dans le groupe comprenant des résines thermoplastiques (e), des agents de réduction de retrait (f) et des matériaux fibreux (g).

5. Produit durci obtenu en cuisant la résine thermodurcissable selon l'une quelconque des revendications 1 à 4.

6. Composant électrique/électronique scellé avec un produit durci obtenu en cuisant la résine thermodurcissable selon l'une quelconque des revendications 1 à 4.
